# EUROPÄISCHE PATENTSCHRIFT

(11) **EP 0 394 884 B1**
(45) Veröffentlichungstag und Bekanntmachung des Hinweises auf die Patenterteilung: **11.05.1994**
(21) Anmeldenummer: 90107589.5
(22) Anmeldetag: 21.04.1990
(51) Int. Cl.: C08F 8/28

(54) **Neue Polyvinylacetale und ihre Verwendung**
Polyvinyl acetals and their use
Polyvinylacétals et leur application

(30) Priorität: 25.04.1989 DE 3913572
(43) Veröffentlichungstag der Anmeldung: 31.10.1990
(73) Patentinhaber: HOECHST AKTIENGESELLSCHAFT, 65926 Frankfurt am Main (DE)
(72) Erfinder: Gutweiler, Matthias, Dr., D-6204 Taunusstein (DE); Driscoll, Robert Kenneth, Dr., D-6230 Frankfurt am Main 50 (DE); Leupold, Ernst Ingo, Dr., D-6392 Neu-Anspach (DE)

(56) Entgegenhaltungen:
- EP-A- 0 287 416
- US-A- 2 459 488
- US-A- 4 743 409
- CHEMICAL ABSTRACTS, Band 101, Nr. 6, August 1984, Seite 32, Zusammenfassung Nr. 39300b, Columbus, Ohio, US; & JP-A-58 217 503 (SEKISUI CHEMICAL CO., LTD) 17-12-1983

## Beschreibung

Die Erfindung betrifft neue Polyvinylacetale, die durch Acetalisierung von Polyvinylalkoholen mit terminal veretherten Oxyethylenaldehyden/Oxaalkanalen der allgemeinen Formel (I) 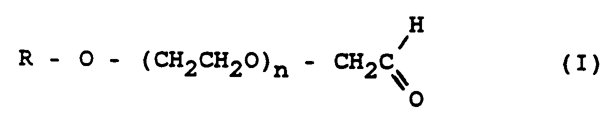
erhältlich sind. In dieser Formel bedeutet R einen geradkettigen oder verzweigten Alkylrest oder einen Cycloalkylrest oder einen Arylrest, und n ist eine ganze Zahl. Derartige Aldehyde sind aus Anlagerungsprodukten von Ethylenoxid an Hydroxylverbindungen R-OH und Umwandlung der terminalen OH-Gruppe in eine 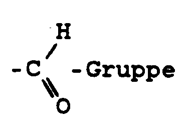
nach bekannten Verfahren, z. B. durch katalytische Oxydehydrierung gemäß der deutschen Offenlegungsschrift 37 01 304, zugänglich.

Polyvinylacetale, insbesondere Polyvinylbutyrale, werden als Bindemittel für Grundierungen und Lacke, als Klebstoffe und Beschichtungsmittel, insbesondere aber in Form von Folien für die Herstellung von Verbundgläsern verwendet.

Wegen des hohen Schmelzpunkts und der auch bei hoher Temperatur geringen Fließfähigkeit von Polyvinylbutyralen können diese nur nach Zusatz von externen Weichmachern, beispielsweise von Phthalsäureestern von Alkoholen mit 6 bis 10 C-Atomen, Triethylenglykol-di-n-heptanoat, Tri-(2-ethylhexyl)-phosphat und Trikresylphosphat thermoplastisch verarbeitet werden. Da diese Weichmacher vielfach mit Polyvinylbutyralen nur begrenzt mischbar bzw. verträglich sind, können sie sich aus dem Polymerisat abscheiden, und selbst verträgliche Weichmacher können z. B. beim Kontakt mit Lösemitteln aus dem Gemisch extrahiert werden. In beiden Fällen ergeben sich erhebliche Eigenschaftsveränderungen des Produkts.

Es ist daher schon versucht worden, Polyvinylacetale innerlich weichzumachen. Nach den US-Patentschriften 2 356 479 und 2 459 488 gelingt dies prinzipiell durch Acetalisierung mit Alkoxyacetaldehyden, dies allerdings erst bei sehr hohem Acetalisierungsgrad, bei dem der Gehalt an freien Vinylalkoholeinheiten naturgemäß niedrig wird. Dadurch bedingt zeigen beispielsweise Folien aus derartigen Acetalen keine hohen Festigkeiten und die Haftung an bestimmten Substraten, insbesondere an Glas, fällt ab.

Ziel der vorliegenden Erfindung war es, innerlich weichgemachte Polyvinylacetale mit hohem Gehalt an Vinylalkoholeinheiten zur Verfügung zu stellen, die ohne Zusatz externer Weichmacher thermoplastisch verarbeitbar sind. Außerdem wurde angestrebt, Polyvinylacetale zur Verfügung zu stellen, die bei guter thermoplastischer Verarbeitbarkeit ein breites Anwendungsgebiet abdecken und z. B. in kaltem Wasser oder in organischen Lösemitteln löslich sind.

Dieses Ziel wird gemäß der Erfindung mit Polyvinylacetalen erreicht, in denen sich mindestens ein Teil der Acetalgruppen von Aldehyden der allgemeinen Formel (I) 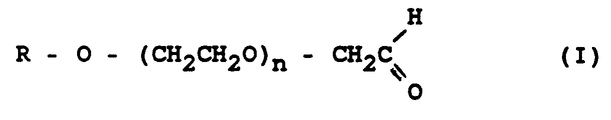
ableitet. Diese Aldehyde sind terminal veretherte Oligoethylenoxidaldehyde. Dabei ist R ein geradkettiger oder verzweigter Alkylrest mit 1 bis 20 C-Atomen, ein Cycloalkylrest, ein Benzylrest oder ein Phenylrest und n ist eine ganze Zahl, mindestens 1. Bevorzugt sind Aldehyde, in denen R ein linearer Alkylrest, insbesondere einer mit 1 bis 4 C-Atomen und n eine ganze Zahl von 1 bis 3, insbesondere 2 ist.

Polyvinylalkohole, aus denen die neuen Acetale hergestellt werden, haben Molekulargewichte zwischen etwa 2 000 und etwa 250 000. Bevorzugt sind Polyvinylalkohole mit Molekulargewichten von etwa 10 000 bis etwa 100 000. Sie können teil- oder vollverseift sein, wobei vollverseiften Typen der Vorrang gegeben wird. Als vollverseift gelten dabei Polyvinylalkohole, bei denen zwischen 98 und 100 % der ursprünglichen Vinylestereinheiten zu Vinylalkoholeinheiten verseift sind.

Die erfindungsgemäßen Polyvinylacetale können neben Acetalgruppen, die sich von Aldehyden der Formel (I) ableiten, noch andere Acetalgruppen enthalten, die sich von aliphatischen, cycloaliphatischen oder aromatischen Aldehyden ableiten, z. B. Formaldehyd, Acetaldehyd, Propionaldehyd, Butyraldehyd, Isononanaldehyd oder Benzaldehyd, bevorzugt von Butyraldehyd, ableiten. Besonders bevorzugt werden Polyvinylacetale, die aliphatische Acetalgruppen mit 1 bis 6 C-Atomen enthalten. Es lassen sich durch die Mitverwendung solcher Aldehyde oder Aldehydgemische z. B. die Löslichkeitseigenschaften der neuen Acetale beeinflussen.

Insgesamt soll die Acetalisierung des Polyvinylalkohols bevorzugt nicht mehr als 85 Mol-%, insbesondere 80 bis 30 Mol-% und vorzugsweise 75 bis 45 Mol-% der ursprünglich vorhandenen Vinylalkoholeinheiten (= 100 Mol-%) erfassen.

Die Eigenschaften der Polyvinylacetale, insbesondere Löslichkeiten und Glastemperaturen, werden durch den verwendeten Aldehyd und den Acetalisierungsgrad bestimmt. So führt die Einführung einer weiteren Ethylenoxidgruppe in die terminal veretherten Oligoethylenoxidaldehyde bei gleichem Acetalisierungsgrad zu einer deutlich höheren inneren Weichmachung des Polymeren. Dies äußert sich in einem Absinken der Glastemperatur. Ebenfalls eine höhere innere Weichmachung, bei gleichem Aldehyd, wird durch einen größeren Acetalisierungsgrad erzielt. Die Löslichkeit der Polyvinylacetale wird durch die Länge der terminalen Alkylkette der für die Acetalisierung eingesetzten Aldehyde sowie durch den Acetalisierungsgrad beeinflußt. So sind z. B. die Polyvinylacetale der Aldehyde mit terminaler Methylgruppe bei einem Restpolyvinylalkoholgehalt von 45 Mol-% kaltwasserlöslich, während die entsprechenden Polyvinylacetale der Aldehyde mit terminaler Butylgruppe wasserunlöslich sind.

Die Wasserlöslichkeit der entsprechenden Polyvinylacetale läßt sich auch durch Mischacetalisierung mit aliphatischen bzw. aromatischen Aldehyden, insbesondere Butyraldehyd, beeinflussen.

Die Herstellung der neuen Polyvinylacetale erfolgt nach an sich bekannten Verfahren in wäßrigem, wäßrig/organischem oder organischem Medium, vorzugsweise jedoch in wäßrigem Medium in Gegenwart saurer Katalysatoren wie Salzsäure, Schwefelsäure, Phosphorsäure oder p-Toluolsulfonsäure. Man kann dabei den Katalysator allmählich zu einer den Aldehyd enthaltenden wäßrigen Lösung von Polyvinylalkohol oder den Aldehyd zu einer den Katalysator enthaltenden Lösung von Polyvinylalkohol geben, oder in einem Eintopfverfahren arbeiten.

Vorteilhaft kann sich bei der Acetalisierung in wäßrigen Medien die Mitverwendung von Emulgatoren auf den Acetalisierungverlauf auswirken. Als besonders geeignete Emulgatoren kommen vorzugsweise anionische Emulgatoren aus der Gruppe (C₈-C₂₀)-Alkansulfonsäuren, fluorierte Fettsäuren bzw. fluorierte langkettige Sulfonsäuren, langkettige Alkylsulfosuccinatester, sowie Gemische aus diesen Emulgatoren, in Frage.

Wenn das herzustellende Polyvinylacetal wasserlöslich ist, kann man die Acetalisierung bei erhöhter Temperatur, beispielsweise bis zu etwa 50°C durchführen. Ist das herzustellende Polyvinylacetal wasserunlöslich, so kühlt man die wäßrige Lösung aus Polyvinylalkohol und Katalysator vor der Zugabe des Aldehyds auf eine Temperatur von höchstens 15°C ab.

Zur Herstellung der erfindungsgemäßen wasserunlöslichen Polyvinylacetale in wäßrigem Medium werden nach bekannten Methoden vorzugsweise 1 bis 50 gew-%ige, insbesondere 5 bis 20 gew.-%ige wäßrige Lösungen von Polyvinylalkohol vorzugsweise in der Wärme hergestellt, der Säurekatalysator zugesetzt, die Lösungen anschließend auf Temperaturen < 15°C abgekühlt und die Acetalisierungsreaktion durch Zudosieren des Aldehyds, vorzugsweise innerhalb von 5 bis 300 Minuten, unter starkem Rühren durchgeführt. Die Acetalisiserungsreaktion ist gegebenenfalls auch als Batch-Reaktion durchführbar.

Die Menge des zuzusetzenden Aldehyds richtet sich nach dem angestrebten Acetalisierungsgrad und dem daraus errechenbaren stöchiometrischen Bedarf. Aufgrund des bekanntermaßen meist nicht vollständigen Aldehydumsatzes wird bevorzugt mit Aldehydüberschuß gearbeitet. Besonders bevorzugt wird der Aldehyd in bis zu 80 mol-%igem, insbesondere 10 bis 20 mol-%igem, Überschuß verwendet. In einer besonders bevorzugten Verfahrensvariante wird die Acetalisierung in der wäßrigen Ausgangs-Polyvinylalkohol-Säurekatalysator-Lösung bei Temperaturen von 5°C bis 10°C in Gang gesetzt, wonach sich das gebildete Polyvinylacetal alsbald meist pulverförmig abscheidet. Zur Vervollständigung der Reaktion wird das Reaktionsgemisch langsam auf Raumtemperatur erwärmt, und es wird gegebenenfalls eine ca. 1 bis 3 Stunden dauernde Nachreaktion bei höheren Temperaturen, z. B. bei 25°C bis 70°C, angeschlossen. Gegebenenfalls wird die Umsetzung unter Emulgatorzusatz durchgeführt, wobei der Emulgator, vorzugsweise eine tensioaktive Sulfonsäure, entweder der Ausgangslösung, oder während des Reaktionsverlaufs und/oder bei der Nachreaktion zugesetzt werden kann. Die zu verwendende Menge Säurekatalysator richtet sich u.a. nach dem angestrebten Acetalisierungsgrad und kann vorzugsweise bis zu 1,1 val, bezogen auf den molaren Vinylalkoholeinheitengehalt, betragen.

Das gebildete wasserunlösliche Polyvinylacetal, das sich vorzugsweise in Pulverform aus der wäßrigen Reaktionslösung abscheidet, wird von der flüssigen Phase abgesaugt, mit schwach alkalisch eingestelltem Wasser (pH 9 bis pH 12) gewaschen und getrocknet.

Die erfindungsgemäßen wasserlöslichen Polyvinylacetale werden ebenfalls nach dem bereits beschriebenen Verfahren in Wasser hergestellt. Die Isolation des Polymeren aus der wäßrigen Lösung erfolgt nach vorhergehender Neutralisation der Lösung vorzugsweise durch Zusatz geeigneter Fällungsmittel. Geeignet sind z. B. verschiedene anorganische Salze wie z. B. Natriumchlorid, Kaliumchlorid, Natriumsulfat, Magnesiumchlorid usw. Weiterhin können zur Fällung mit Wasser mischbare Lösungsmittel, wie z. B. wasserlösliche Alkohole, vorzugsweise Ethanol und/oder Methanol und andere organische Lösungsmittel, vorzugsweise Tetrahydrofuran und/oder Dioxan, verwendet werden. Alternativ kann das Polymere nach vorhergehender Dialyse durch Gefriertrocknung isoliert werden.

Grundsätzlich ist die Herstellung aller erfindungsgemäßen Polyvinylacetale auch in organischen Lösungsmitteln durchführbar. Mit den in organischen Lösungsmitteln nicht löslichen Polyvinylalkoholen kann sie als Zwei- bzw. Mehrphasenreaktion durchgeführt werden. Durch Zusatz von Wasser zu wasserlöslichen bzw. wasserverdünnbaren Lösungsmitteln kann auch eine Einphasenreaktion erreicht werden.

Als Lösungsmittel eignen sich z. B. Xylole, Toluol, Chloroform, Methylenchlorid, besonders jedoch mit Wasser mischbare Lösungsmittel, insbesondere wasserlösliche Alkohole, vorzugsweise Ethanol und/oder Methanol.

Zur Herstellung der erfindungsgemäßen Polyvinylacetale in organischen Lösungsmitteln werden der Säurekatalysator, der Aldehyd und der PVAL in dem organischen Lösungsmittel aufgeschlämmt bzw. suspendiert bzw. dispergiert oder gelöst und das Gemisch unter Rückfluß erhitzt. Gegebenenfalls kann der Aldehyd auch während des Reaktionsverlaufs zudosiert werden. Die in dem organischen Lösungsmittel unlöslichen Polyvinylalkohole gehen dabei mit fortschreitender Acetalisierung in Lösung. Nach Beendigung der Acetalisierungsreaktion wird das Reaktionsprodukt durch Zusatz von unpolaren Lösungsmitteln, wie z. B. Pentan, Hexan, Heptan u.a. zu der Reaktionslösung oder durch Eingießen der Reaktionslösung in eiskaltes Wasser bzw. eiskaltes Wasser-Alkohol-Gemisch ausgefällt, von der flüssigen Phase abgesaugt, mit schwach alkalisch eingestelltem Wasser (pH 9 bis 12) gewaschen und getrocknet. Alternativ kann das Produkt auch durch Abdestillieren des Lösungsmittels isoliert werden.

Die erfindungsgemäßen Polyvinylacetale eignen sich sowohl in Reinform als auch in Abmischung mit geeigneten organischen Weichmachern zur Herstellung von Folien durch thermoplastische Verformung. Als Weichmacher geeignet sind grundsätzlich alle für die handelsüblichen Polyvinylacetale verwendbaren Weichmacher, vorzugsweise z. B. Triethylenglykoldi(n-heptanoat), ferner Adipinsäureester, Phthalsäureester, Phosphorsäureester u.a.

Die erfindungsgemäßen Polyvinylacetale, insbesondere die Mischacetale, können darüber hinaus auch mit handelsüblichen Polyvinylacetalen, insbesondere Polyvinylbutyral, abgemischt werden, vorzugsweise im Gewichtsverhältnis von 99 : 1 bis 1 : 99, insbesondere 95 : 5 bis 5 : 95, besonders bevorzugt 80 : 20 bis 20 : 80. Die so hergestellten Mischungen können gleichfalls, gegebenenfalls unter Mitverwendung von Weichmachern, thermoplastisch zu Folien verarbeitet werden.

Die erfindungsgemäßen Polyvinylacetale lassen sich ferner nach unterschiedlichen Methoden vernetzen. So können Vernetzungen z. B. durch Anwendung von reaktiven mehrfunktionellen Verbindungen, wie z. B. Isocyanaten, Säurechloriden etc., erzielt werden, oder auch durch radikalisch initiierte Vernetzungen, wie z. B. durch photochemische oder thermische Initiierung in Gegenwart von Radikalbildnern und radikalisch polymerisierbaren Monomeren.

Aufgrund dieser zu Vernetzungen führenden Eigenschaften eignen sich die erfindungsgemäßen Polyvinylacetale auch als Bindemittel, z. B. in Lackzubereitungen auf Lösungsmittelbasis im Falle der wasserunlöslichen Polyvinylacetale bzw. in Lackzübereitungen auf wäßriger Basis im Falle der wasserlöslichen Polyvinylacetale.

Aufgrund der guten Haftungseigenschaften der erfindungsgemäßen Polyvinylacetale gegenüber diversen Materialien, vorzugsweise gegenüber Metallen und Glas, lassen sich diese vorteilhaft als Beschichtungsmassen verwenden, wobei solche Beschichtungen sowohl aus Polymerisatlösungen als auch aus der Polymerisatschmelze aufgebracht werden können. Demgegenüber lassen sich handelsübliche Polyvinylbutyrale im allgemeinen nicht ohne den Zusatz von organischen Weichmachern aus der Schmelze anwenden.

Aufgrund der guten Haftungseigenschaften gegenüber Glas, insbesondere bei den erfindungsgemäßen Polyvinylacetalen mit höherem Gehalt an Vinylalkoholeinheiten, sind die erfindungsgemäßen Polyvinylacetalfolien besonders geeignet zur Herstellung von Verbundgläsern. Bei der Verarbeitung der erfindungsgemäßen Polyvinylacetale bzw. ihren Abmischungen mit handelsüblichen Polyvinylbutyralen zu Folien lassen sich die Folieneigenschaften, wie z. B. die Folienreißfestigkeit, die Foliendehnbarkeit, das Blockungsverhalten etc. in einem breiten Rahmen beeinflussen. Wegen ihrer überraschend guten Haftungseigenschaften stellen die erfindungsgemäßen Polyvinylacetale insbesondere auch interessante Beschichtungsmassen für Metalle, vorzugsweise für Eisen und Stahl, dar.

Gegenstand der Erfindung ist daher ferner die Verwendung der erfindungsgemäßen Polyvinylacetale, u.a. auf allen in der vorliegenden Beschreibung genannten Anwendungsgebieten.

So können die erfindungsgemäßen Polyvinylacetale vorteilhaft auch auf zahlreichen Anwendungsgebieten eingesetzt werden, auf denen üblicherweise bekannte Polyvinylacetale Verwendung finden, vorzugsweise z. B. als Bindemittel für Pigmente, zur Herstellung von Druckfarben, von Schmelzklebern, von lösungsmittelhaltigen bzw. lösungsmittelfreien Klebstoffen sowie als Bindemittel für Keramikpulver bei der Herstellung von hochwertigen keramischen Elektronikbauteilen. Sie eignen sich auch als Bindemittel und/oder Beschichtungsmittelbestandteil für anorganische und/oder organische Fasern, Fäden, Faservliese, textile Gebilde, Zellulosematerialien, Papier etc.

Je nach Anwendung können die erfindungsgemäßen Polyvinylacetale mit üblichen Zusatzstoffen vermischt werden, wie z. B. Pigmenten, Farbstoffen, Weichmachern, Lösungsmitteln, Haftungsregulatoren und Stabilisatoren. Wie bereits oben erwähnt, ist eine Mitverwendung von Weichmachern bei der thermoplastischen Verformung erfindungsgemäßer Polyvinylacetale prinzipiell nicht erforderlich, obgleich sie in manchen Fällen vorteilhaft sein kann. Im letzteren Fall liegen z. B. bei erfindungsgemäßen Polyvinylacetalen die Aufwandmengen an Weichmacher jedoch deutlich niedriger als bei den bekannten Polyvinylacetalen, insbesondere Polyvinylbutyralen.

Als Stabilisatoren können die bei den bekannten Polyvinylbutyralen verwendeten phenolischen Verbindungen Verwendung finden, wie z. B. 2,4-Di-tert.-butyl-p-kresol, Phosphite wie Tris-nonyl-phenylphosphit, u.a.

Die Zugabe der genannten Zusatzstoffe kann in vielen Fällen sowohl vor als auch während oder nach der Herstellung der erfindungsgemäßen Polyvinylacetale erfolgen.

Die Erfindung wird durch die nachfolgenden Beispiele näher erläutert.

### Beispiele 1 bis 9

### Beispiel 1

In einem Reaktionsgefäß mit Rührwerk wird unter Stickstoffatmosphäre und Erwärmung eine 10 %ige wäßrige PVAL-Lösung (70 g PVAL-Feststoff) hergestellt. Als PVAL-Komponente wird ein PVAL mit einer Viskosität der 4 %igen Lösung von 28 mPa·s (Messung nach Höppler: DIN 53015) und einem Hydrolysegrad von 99 % eingesetzt. Zu der PVAL-Lösung werden 100 ml einer 20 %igen Salzsäurelösung und 0,14 g 2,6-Di-tert.-butyl-4-methylphenol zugegeben. Bei 50°C werden 83,7 g 3,6-Dioxaheptanal innerhalb von 30 min zugetropft. Die Reaktionslösung wird für 5 h bei 48°C gehalten. Es entsteht eine hochviskose Lösung. Anschließend wird mit KOH-Lösung neutralisiert (pH 7,5) und das gebildete Salz durch Dialyse gegen destilliertes Wasser entfernt. Das Reaktionsprodukt wird anschließend durch Gefriertrocknung isoliert.

An dem erhaltenen Polyvinylacetal werden folgende analytische und anwendungstechnische Kenndaten ermittelt: Der Gehalt an Vinylalkoholeinheiten in dem Polyvinylacetal beträgt 17,9 Gew.-%, bezogen auf das Polyvinylacetal, bzw. 31,8 Mol-%, bezogen auf die Vinylalkoholeinheiten des Ausgangs-PVAL's. Das Polyvinylacetal besitzt einen Alkalititer (ml n/100 HCl/100 g Polymerisat) von 28 und einen Trübungspunkt der 1 %igen wäßrigen Lösung von 49°C. Es ist außer in Wasser auch in 1 : 1 wäßrigen Mischungen der Alkohole Ethanol, Methanol und Isopropanol sowie in einer 1 : 1 wäßrigen Mischung von Aceton löslich. Das Polymere weist eine Glastemperatur von 37°C auf. Ein vom Acetalisierungsgrad und vom Molekulargewicht des eingesetzten PVAL's vergleichbares Polyvinylbutyral weist dagegen eine Glastemperatur von 75°C auf.

Das Polyvinylacetal läßt sich bei 165°C und 80 bar ohne Zusatz von Weichmachern zu einer wasserlöslichen Preßfolie verarbeiten. Folgende spezifischen Folieneigenschaften wurden nach vorhergehender Klimatisierung (23°C, 50 % RLF) ermittelt:
Festigkeit: 16,4 N/mm²; Dehnung: 300 %.

Das Polyvinylacetal zeigt gute Haftung auf Glas und Metall.

### Beispiel 2

Reaktionsführung analog Beispiel 1. Zugabe von 62,6 g 3,6-Dioxaheptanal.
An dem erhaltenen Polyvinylacetal werden folgende analytische und anwendungstechnische Kenndaten ermittelt: Der Gehalt an Vinylalkoholeinheiten in dem Polyvinylacetal beträgt 22,8 Gew.-%, bezogen auf das Polyvinylacetal, bzw. 38,7 Mol-%, bezogen auf die Vinylalkoholeinheiten des Ausgangs-PVAL's. Das Polyvinylacetal besitzt einen Alkalititer (ml n/100 HCl/100 g Polymerisat) von 30 und einen Trübungspunkt der 1 %igen wäßrigen Lösung von 52°C. Es ist außer in Wasser auch in 1 : 1 wäßrigen Mischungen der Alkohole Ethanol, Methanol und Isopropanol sowie in einer 1 : 1 wäßrigen Mischung von Aceton löslich. Das Polymere weist eine Glastemperatur von 45°C auf. Das Polyvinylacetal läßt sich bei 165°C und 80 bar ohne Zusatz von Weichmachern zu einer wasserlöslichen Preßfolie verarbeiten.
Folgende spezifischen Folieneigenschaften wurden nach vorhergehender Klimatisierung (23°C, 50 % RLF) ermittelt:
Festigkeit: 19,4 N/mm²; Dehnung: 275 %.

Das Polyvinylacetal zeigt sehr gute Haftung auf Glas und Metall.

### Beispiel 3

Reaktionsführung analog Beispiel 1. Die Isolierung des Polyvinylacetals erfolgte jedoch durch Eintropfen der neutralisierten Reaktionslösung in eiskaltes Tetrahydrofuran. Das Produkt wurde über einen Büchner-Trichter abgesaugt und getrocknet. Die Produkteigenschaften entsprachen weitgehend den in Beispiel 1 angeführten.

### Beispiel 4

20 g PVAL wie in Beispiel 1 werden in 380 ml Ethanol suspendiert und 200 ml Wasser zugegeben. Es werden 24 g 3,6-Dioxaheptanal und 0,4 g p-Toluolsulfonsäure zugegeben. Der Ansatz wird für 24 h bei 55°C gerührt. Anschließend wird abfiltriert und das Filtrat neutral gestellt (pH 8,0). Das Reaktionsprodukt wird aus dem Filtrat nach Zugabe eines Fällungsmittels (Heptan) isoliert. Man erhält ein weißes Pulver mit einem Gehalt an Vinylalkoholeinheiten von 31,9 Gew.-%. Das Lösungsverhalten entspricht weitgehend dem Lösungsverhalten des Polyvinylacetals in Beispiel 1. Die 1 %ige wäßrige Lösung weist einen Trübungspunkt von 61,5°C auf. Das Polyvinylacetal läßt sich bei 165°C und 80 bar ohne Zusatz von Weichmachern zu einer wasserlöslichen Preßfolie verarbeiten.

### Beispiel 5

Änderungen zu Beispiel 1:
Als PVAL-Komponente wird in PVAL mit einer Viskosität der 4 %igen Lösung von 4 mPa·s (Messung nach Höppler; DIN 53015) und einem Hydrolysegrad von 98 % eingesetzt. Nach Zugabe der HCl (110 ml, 20 Gew.-%) wird bei 55°C 25,54 g 3,6-Dioxaheptanal zugegeben und für 3 h rühren lassen. Die Lösung wird auf 7°C abgekühlt und 33 g Butyraldehyd zugegeben. Der Ansatz wird hoch viskos und es fällt ein feinteiliges weißes Pulver aus. Die Suspension wird für 3 h bei 15°C gerührt. Das Pulver wird anschließend abgesaugt, mit Wasser neutral gewaschen und anschließend in KOH-Lösung (pH 11,5) stabilisiert. Das Pulver wird erneut abgesaugt und getrocknet. Man erhält 106 g des Polyvinylmischacetals. Es wurden folgendende analytische und anwendungstechnische Kenndaten ermittelt:
Der Gehalt an Vinylalkoholeinheiten in dem Polyvinylacetal beträgt 13,7 Gew.-%. Die Glastemperatur beträgt 54°C. Ein vergleichbares Polyvinylbutyral besitzt eine Glastemperatur von 72°C.

### Beispiel 6

Reaktionsführung analog Beispiel 5.
Es werden jedoch 54,3 g 3,6-Dioxaheptanal und 12,9 g Butyraldehyd eingesetzt. Es entsteht ein wasserlösliches Polyvinylmischacetal, das analog Beispiel 1 aufgearbeitet wird. Ausbeute 112 g. Es wurden folgende analytische und anwendungstechnische Kenndaten ermittelt:
Der Gehalt an Vinylalkoholeinheiten in dem Polyvinylacetal beträgt 17,4 Gew.-%. Das Polyvinylacetal besitzt einen Alkalititer von 40 und einen Trübungspunkt von 24°C. Die Glastemperatur beträgt 44°C. Gegenüber einem im Acetalisierungsgrad vergleichbaren Polyvinylbutyral zeigt es eine deutliche Absenkung der Glastemperatur. Die Wasseraufnahme des Polymerpulvers ist im Vergleich zu Beispiel 1 deutlich geringer.

### Beispiel 7

Reaktionsführung analog Beispiel 1.
Zur Acetalisierung werden 101,6 g 3,6,9-Trioxadecanal eingesetzt. Man erhält 140 g eines weißen Pulvers. Es wurden folgende analytische und anwendungstechnische Kenndaten ermittelt:
Der Gehalt an Vinylalkoholeinheiten in dem Polyvinylacetal beträgt 23,7 Gew.-% bzw. 45,1 Mol-%, bezogen auf die Vinylalkoholeinheiten des Ausgangs-PVAL's. Gegenüber den Polyvinylacetalen mit 3,6-Dioxaheptanal zeigt es eine noch deutlichere innere Weichmachung. Die Glastemperatur beträgt 15°C. Im Vergleich zu Beispiel 1 besitzt das Polyvinylacetal bei einem höheren Gehalt an Vinylalkoholeinheiten eine um 22°C niedrigere Glastemperatur. Der Trübungspunkt beträgt 68°C. Das Polyvinylacetal läßt sich bei 165°C und 80 bar ohne Zusatz von Weichmachern zu einer wasserlöslichen Preßfolie verarbeiten. Folgende spezifischen Folieneigenschaften wurden nach vorhergehender Klimatisierung (23°C, 50 % RLF) ermittelt:
Festigkeit: 6,4 N/mm²; Dehnung 570 %.
Das Polyvinylacetal zeigt aufgrund seines hohen Gehalts an Vinylalkoholeinheiten eine sehr gute Haftung auf Glas und Metall.

### Beispiel 8

Reaktionsführung analog Beispiel 1.
Zur Acetalisierung werden 90,3 g 3,6,9-Trioxadecanal eingesetzt. Man erhält 142 g eines weißen Pulvers. Es wurden folgende analytische und anwendungstechnische Kenndaten ermittelt:
Der Gehalt an Vinylalkoholeinheiten in dem Polyvinylacetal beträgt 26,2 Gew.-% bzw. 48,3 Mol-%, bezogen auf die Vinylalkoholeinheiten des Ausgangs-PVAL's. Die Glastemperatur beträgt 20°C. Der Trübungspunkt beträgt 70°C. Das Polyvinylacetal läßt sich bei 165°C und 80 bar ohne Zusatz von Weichmachern zu einer wasserlöslichen Preßfolie verarbeiten. Folgende spezifischen Folieneigenschaften wurden nach vorhergehender Klimatisierung (23°C, 50 % RLF) ermittelt:
Festigkeit: 7,0 N/mm²; Dehnung: 530 %.
Das Polyvinylacetal zeigt aufgrund seines hohen Gehalts an Vinylalkoholeinheiten eine sehr gute Haftung auf Glas und Metall.

### Beispiel 9 (Vergleichsbeispiel)

Reaktionsführung analog Beispiel 1. Reaktionstemperatur 40°C. Zur Acetalisierung werden 53,4 g Methoxyacetaldehyd eingesetzt. Man erhält 93 g eines weißen Pulvers.
Es wurden folgende analytische und anwendungstechnische Kenndaten ermittelt:
Der Gehalt an Vinylalkoholeinheiten in dem Polyvinylacetal beträgt 29,3 Gew.-% bzw. 40,4 Mol-%, bezogen auf die Vinylalkoholeinheiten des Ausgangs-PVAL's. Im Vergleich zu den Polyvinylacetalen mit 3,6-Dioxaheptanal und 3,6,9-Trioxadecanal besitzt das Polyvinylacetal mit 79°C eine hohe Glastemperatur. Der Trübungspunkt beträgt 45°C. Die geringe innere Weichmachung wird auch bei den analytischen Daten der Preßfolien (geringe Dehnung!) deutlich (Herstellung: 165°C, 80 bar; Klimatisierung: 23°C, 50 % RLF). Reißfestigkeit: 60,7 N/mm²; Dehnung: 15 %.

## Patentansprüche

1. Acetale des Polyvinylalkohols, dadurch gekennzeichnet, daß sie Acetalgruppen enthalten, die sich von Aldehyden der allgemeinen Formel (I) 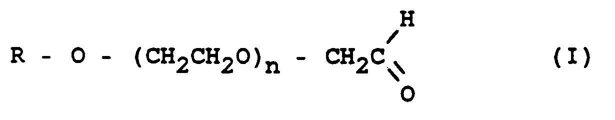 ableiten, in der n eine ganze Zahl und R ein linearer oder verzweigter Alkylrest mit 1 bis 20 C-Atomen oder ein Cycloalkylrest oder ein Arylrest ist.

2. Acetale des Polyvinylalkohols nach Anspruch 1, dadurch gekennzeichnet, daß n in Formel 1 eine ganze Zahl von 1 bis 3 ist.

3. Acetale des Polyvinylalkohols nach Anspruch 1 oder 2, dadurch gekennzeichnet, daß R in Formel (I) ein Alkylrest mit 1 bis 4 C-Atomen ist.

4. Acetale des Polyvinylalkohols nach Anspruch 1, 2 oder 3, dadurch gekennzeichnet, daß höchstens 85 Mol-% der ursprünglich vorhandenen Hydroxylgruppen acetalisiert sind.

5. Acetale des Polyvinylalkohols nach mindestens einem der Ansprüche 1 bis 4, dadurch gekennzeichnet, daß sie neben den von Aldehyden der Formel (I) abgeleiteten Acetalgruppen andere Acetalgruppen enthalten.

6. Acetale des Polyvinylalkohols nach Anspruch 5, dadurch gekennzeichnet, daß sie aliphatische Acetalgruppen mit 1 bis 6 C-Atomen enthalten.

7. Folien, hergestellt aus Acetalen des Polyvinylalkohols nach Anspruch 1 bis 6.

8. Kleb- oder Beschichtungsmittel, enthaltend Acetale des Polyvinylalkohols nach Anspruch 1 bis 6.

9. Formkörper, hergestellt aus Acetalen des Polyvinylalkohols nach Anspruch 1 bis 6.

## Claims

1. An acetal of polyvinyl alcohol, which contains acetal groups which are derived from aldehydes of the formula (I) 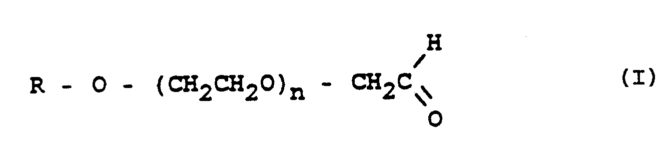 in which n is an integer and R a linear or branched alkyl radical having 1 to 20 carbon atoms or a cycloalkyl radical or an aryl radical.

2. The acetal of polyvinyl alcohol as claimed in claim 1, wherein n in formula I is an integer of from 1 to 3.

3. The acetal of polyvinyl alcohol as claimed in claim 1 or 2, wherein R in formula (I) is an alkyl radical having 1 to 4 carbon atoms.

4. An acetal of polyvinyl alcohol as claimed in claim 1, 2 or 3, wherein not more than 85 mol-% of the hydroxyl groups originally present are acetalated.

5. The acetal of polyvinyl alcohol as claimed in at least one of claims 1 to 4, which contains other acetal groups in addition to those derived from aldehydes of the formula (I).

6. The acetal of polyvinyl alcohol as claimed in claim 5, which contains aliphatic acetal groups having 1 to 6 carbon atoms.

7. A film prepared from acetals of polyvinyl alcohol as claimed in claim 1 to 6.

8. An adhesive or coating agent containing an acetal of polyvinyl alcohol as claimed in claim 1 to 6.

9. A shaped article prepared from an acetal of polyvinyl alcohol as claimed in claim 1 to 6.

## Revendications

1. Acétals de l'alcool polyvinylique, caractérisés en ce qu'ils contiennent des groupes acétals qui dérivent des aldéhydes de formule générale (I) : 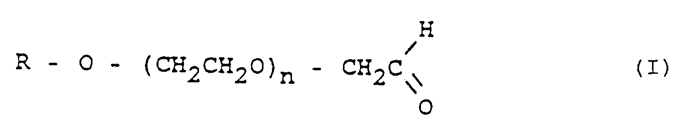 dans laquelle n est un nombre entier et R un radical alkyle linéaire ou ramifié comportant de 1 à 20 atomes de carbone ou un radical cycloalkyle ou un radical aryle.

2. Acétals de l'alcool polyvinylique selon la revendication 1, caractérisés en ce que n dans la formule (I) est un nombre entier de 1 à 3.

3. Acétals de l'alcool polyvinylique selon la revendication 1 ou 2, caractérisés en ce que R dans la formule (I) est un radical alkyle comportant de 1 à 4 atomes de carbone.

4. Acétals de l'alcool polyvinylique selon la revendication 1, 2 ou 3, caractérisés en ce que tout au plus 85 moles-% des groupes hydroxyle présents à l'origine sont acétalisés.

5. Acétals de l'alcool polyvinylique selon au moins l'une des revendications 1 à 4, caractérisés en ce qu'ils contiennent outre les groupes acétal dérivant des aldéhydes de formule (I), d'autres groupes acétal.

6. Acétals de l'alcool polyvinylique selon la revendication 5, caractérisés en ce qu'ils contiennent des groupes acétal aliphatiques comportant de 1 à 6 atomes de carbone.

7. Feuilles préparées à partir des acétals d'alcool polyvinylique selon les revendications 1 à 6.

8. Agent adhésif ou agent d'enduction contenant des acétals de l'alcool polyvinylique selon les revendications 1 à 6.

9. Produit moulé préparé à partir des acétals de l'alcool polyvinylique selon les revendications 1 à 6.
